# EUROPÄISCHE PATENTSCHRIFT

(11) **EP 0 803 403 B1**
(45) Veröffentlichungstag und Bekanntmachung des Hinweises auf die Patenterteilung: **09.02.2000**
(21) Anmeldenummer: 97104007.6
(22) Anmeldetag: 11.03.1997
(51) Int. Cl.: B60R 13/02, B62D 31/02

(54) **Lösbare Befestigung von Verkleidungsteilen im Inneraum von Kraftfahrzeugen**
Detachable fixation of upholstery parts in vehicle interieurs
Fixation amovible des parties d'habillage dans les intérieurs de véhicule

(30) Priorität: 25.04.1996 DE 19616442
(43) Veröffentlichungstag der Anmeldung: 29.10.1997
(73) Patentinhaber: MAN Nutzfahrzeuge Aktiengesellschaft, 80976 München (DE)
(72) Erfinder: Krimmling, Harald, Dipl.-Ing., 85250 Altomünster (DE); Sager, Johann, 85235 Odelzhausen (DE)

(56) Entgegenhaltungen:
- DE-A- 2 715 549
- DE-A- 3 209 777
- DE-A- 3 530 533
- FR-A- 2 542 828
- FR-A- 2 551 808
- PATENT ABSTRACTS OF JAPAN vol. 10, no. 191 (M-495) [2247] , 4.Juli 1986 & JP 61 036040 A (KUNIMATSU KOGYO KK), 20.Februar 1986,

## Beschreibung

Die Erfindung betrifft eine Vorrichtung nach dem Oberbegriff des Anspruches 1.

Eine Vorrichtung dieser Art ist aus der DE-A-37 34 371 bekannt. Hier werden über U-förmige Klemmkeile Dach- oder Türinnenverkleidungen von Kraftfahrzeugen lösbar über Zwischenteile, die mit der Karosserie fest verbunden sind und entsprechende Klemmnuten für die Klemmkeile aufweisen, kraftschlüssig angebracht. Bei stark konkav geformten Innenverkleidungen könnten auch bei einem Unfall des Fahrzeuges die Verkleidungsteile genügend gegen ein Herausschießen gesichert sein. Annähernd ebene Verkleidungsteile würden bei einem Unfall mit großer Sicherheit herausschießen und könnten dann Passagiere verletzen.

Die DE-A-39 08 106 offenbart die Befestigung eines Verkleidungsteiles mit Klipsen, wobei die Klipse nicht auf der Sichtseite sind und eine eigene Hausung im Verkleidungsteil haben. Die Klipse werden in eine karosserieseitige Bohrung eingedrückt und geben damit dem Verkleidungsteil den nötigen Halt. Allerdings ist das Demontieren der Verkleidungsplatte schwierig, die Klipse können brechen und rund um die karosserieseitige Bohrung kann sich das Blech verbiegen. Außerdem sind die karosserieseitigen Bohrungen von Anfang an mit Korrosionsproblemen behaftet.

Aus der DE-A-41 21 013 ist die Befestigung eines Verkleidungsteiles für Fenster- und Türsäulen bekannt. Das Verkleidungsteil wird auf der Nicht-Sichtseite mittels dort an- geordneter Klipse in Bohrungen in der Tür- oder Fenstersäule befestigt.

Aus der DE-A-33 09 131 ist die sichtseitige Befestigung einer kaschierten Folie einerseits und angrenzendem Stoff, Leder oder ähnlichem andererseits auf einem Trägermaterial, das eine U-förmige Nut aufweist, bekannt. Kaschierte Folie und z. B. Leder werden in diese Nut eingeklemmt oder eingeklebt oder mittels eines Keders gehalten.

Aus der DE-A-32 36 624 ist eine formsteife Verkleidung für Innenräume von Kraftwagen bekannt, an deren Endbereichen die sich überlappenden Bauteile toleranzausgleichend wirken und im Überlappungsbereich durch Spreizniete an einem Hohlträger des Aufbaues befestigt sind. Die Spreizniete sind ohne Zerstörung nicht mehr ausbaubar.

Aus der DE-A-32 09 777, der Fig. 1, ist schließlich die Lagerung einer Abdeckscheibe für eine bandförmige Leuchte gezeigt. Die Abdeckscheibe wird auf einer Seite in ein U-förmiges Elastomerprofil eingesteckt, das in einer U-förmigen Klammer eingelegt ist und auf der gegenüberliegenden Seite ebenfalls in ein Elastomerprofil eingesteckt und über eine Zunge vom Gerippe her und einer Klammer gehaltert ist.

Allgemein kann festgestellt werden, daß bei den herkömmlichen Befestigungsarten von Verkleidungsteilen Bohrungen im Gerippe oder in Blechrändern erforderlich sind, in denen Klipse eingedrückt oder selbstschneidende Schrauben eingedreht werden. Solche Bohrungen sind immer korrosionsgefährdet. Zusätzlich können Späne anfallen, die bevorzugt rosten, und bei Bildung von Kondensat Rostflecken hervorrufen. Werden Klipse ausgebaut, so werden sie oder die Bohrungen durch den Ausbau meist beschädigt, Klipse oft zerstört. Es ist dann aufwendig, ein einmal ausgebautes Verkleidungsteil wieder sicher zu befestigen.

Aufgabe der Erfindung ist es, Innenverkleidungsteile haltesicher und ohne Bohrungen für Befestigungsmittel lösbar an einem Fahrzeuggerippe, insbesondere Busgerippe, zu befestigen.

Die Aufgabe wird erfindungsgemäß durch die Merkmale des Anspruches 1 gelöst.

Zur Halterung des oberen Randes der Verkleidung wird zunächst auf das Busgerippe erfindungsgemäß ein durchgehendes Winkelprofil aufgebracht oder aufgepunktet bzw. aufgeschweißt. Zur Halterung des unteren Randes der Verkleidung wird erfindungsgemäß eine abgewinkelte Leiste an vertikalen Streben des Busgerippes und z. B. an einem Lüftungskanal, der den Abschluß zum Busboden bildet, geschraubt. Durch beide Maßnahmen kann nun ein Verkleidungsteil unabhängig vom Busgerippe befestigt werden. Die abgewinkelte untere Leiste hat eine U-förmige Nut, in die das Verkleidungsteil von oben her eingedrückt wird. Zur Befestigung des oberen Randes des Verkleidungsteiles ist eine L-förmige Leiste mit zwei U-förmigen Nuten vorgesehen. In die eine Nut ragt das Verkleidungsteil, in die andere Nut das Winkelprofil, das mit dem Busgerippe verbunden ist. Die L-förmige Leiste wird aufgeklopft. Alle Nuten sind mit den eingeschobenen Teilen so abgestimmt, daß eine gute Klemmwirkung erreicht wird.

Die L-förmige Leiste ist zum Fenster hin abgewinkelt und hat einen horizontalen Abstand zur Innenseite des Fensters, so daß das Fenster von unten her belüftet werden kann. Will man zwischen Innenseite des Fensters und dem L-förmigen Profil dicht abschließen, so ist eine Dichtung auf die L-förmige Leiste aufzubringen (ist nicht gezeichnet).

Der Stoß zwischen zwei Verkleidungsfeldern sollte vorzugsweise so gelegt sein, daß eine vertikale Gerippestrebe vorhanden ist. An dieser Gerippestrebe sind erfindungsgemäß zwei Winkelprofile aufgebracht, aufgepunktet bzw. aufgeschweißt, die zueinander spiegelbildlich angeordnet und voneinander beabstandet sind. Die Verkleidungsteile beider Felder und die freistehenden Schenkel der Winkelprofile werden mit einer H-förmigen Leiste miteinander verbunden und geklemmt und zum Gerippe hin gehaltert. Alle genannten Leisten sind vorzugsweise aus Aluminium, Holz oder Kunststoff hergestellt. Die Verkleidungsteile an den Fenster- und Türsäulen sind erfindungsgemäß so ausgebildet, daß sie die L-förmige Leiste auf der Unterseite der Fenster übergreifen und klemmen. Dadurch wird ein mutwilliges, unbefugtes Entfernen von Teilen der Verkleidung verhindert.

In den Zeichnungen ist ein Ausführungsbeispiel der Erfindung schematisch dargestellt.

Es zeigen:
- Fig. 1: einen Querschnitt einer Verkleidung zwischen Fußboden und Fensterunterseite,
- Fig. 2: einen Querschnitt am Stoß von zwei Verkleidungsteilen.

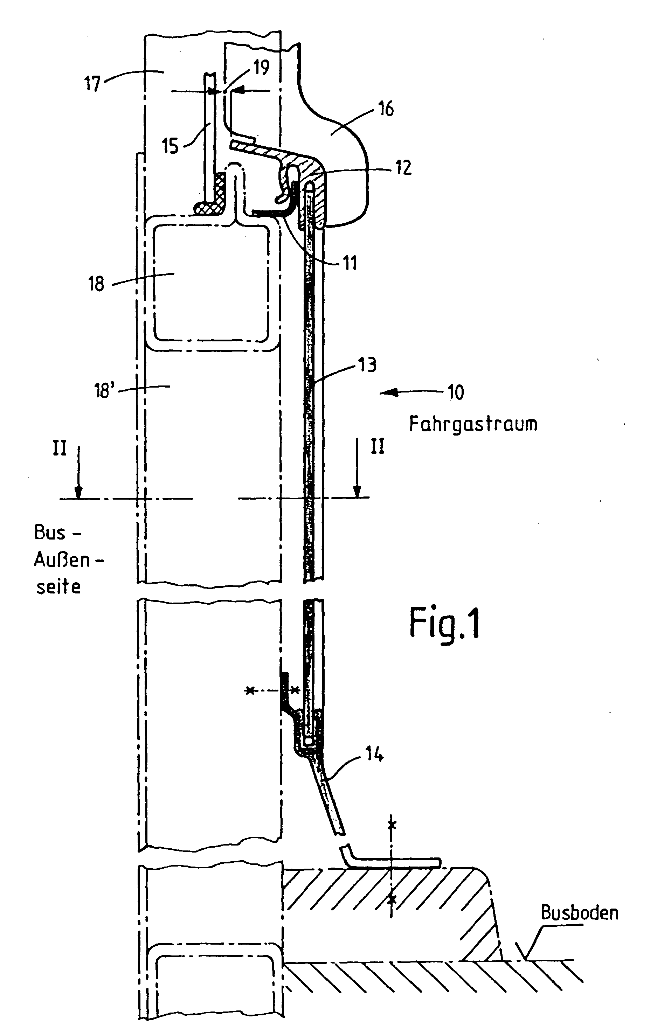

In der Fig. 1 ist der Träger 18 einer Busgerippe-Seitenwand dargestellt, auf dem das Winkelprofil 11 aufgeschweißt ist. Am unteren Ende der Verkleidung 10 ist eine Leiste 14 an vertikalen Trägern 18' des Gerippes und z. B. an einem Lüftungskanal, der den Anschluß zum Busboden bildet, geschraubt. Die Leiste 14 hat eine U-förmige Nut, in die das Verkleidungsteil 13 eingesteckt bzw. eingeklopft wird. Am oberen Ende der Verkleidung 10 ist eine L-förmige Leiste 12 vorgesehen, die zwei U-förmige Nuten aufweist. In die eine Nut ist das Verkleidungsteil 13 eingesteckt und geklemmt und in die andere Nut ist das freie Ende des aufgeschweißten Winkelprofiles 11 eingesteckt, mit dem die Halterung zum Busgerippe 18 gebildet wird. Die Maße Nuten der Leisten 12, 14, das Maß des Verkleidungsteiles 13 und das des Winkelprofiles 11 sind so ausgeführt, daß in jedem Fall Klemmwirkung erreicht wird. Die Leiste 12 bildet gleichzeitig den Abschluß der Verkleidung 10 zum Fenster 15 hin. Zwischen der Innenseite des Fensters 15 und der Leiste 12 kann entweder ein Spalt 19 für eine Belüftung dieses Bereiches bleiben oder es kann der Spalt 19 mittels einer Dichtung verschlossen (nicht gezeichnet) sein. Die Verkleidung 16 einer Fenstersäule 17 oder Türsäule ist so ausgebildet, daß es die Leiste 12 übergreift und klemmt. Dadurch kann die Leiste 12 von Unbefugten nicht mehr ausgebaut werden.

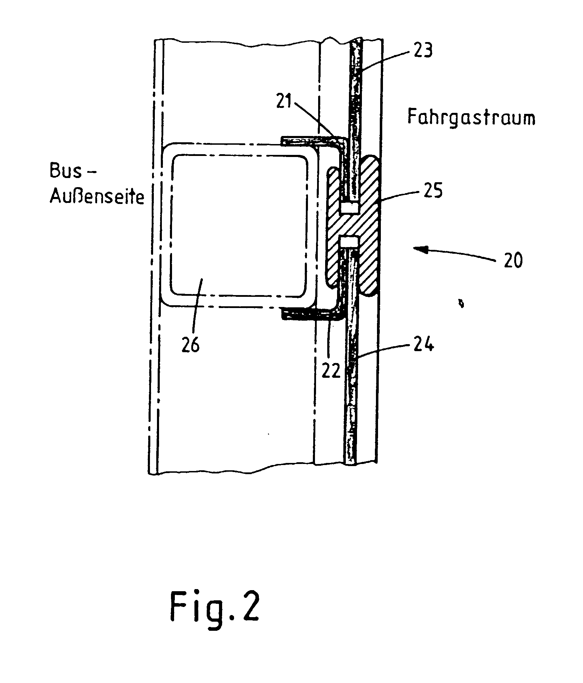

In der Fig. 2 ist im Querschnitt die Verbindung 20 am Stoß zweier Verkleidungsteile 23, 24 dargestellt. Auf dem Gerippeträger 26 sind zwei Winkelprofile 21, 22 spiegelbildlich und beabstandet zueinander aufgeschweißt. Eine H-förmige Leiste 25, die eingeschoben wird, hält und klemmt das Verkleidungsteil 23 mit dem Winkelprofil 21 und das Verkleidungsteil 24 mit dem Winkelprofil 22 und verbindet gleichzeitig die Verkleidungsteile 23 und 24 miteinander. Die Leisten 12, 14 und 25 können aus Kunststoff, Aluminium oder Holz sein.

## Patentansprüche

1. Vorrichtung zur lösbaren Befestigung von Verkleidungsteilen im Innenraum eines Fahrzeuges, insbesondere eines Omnibusses, wobei, durch Aufbringen zusätzlicher durchgehender Winkelprofile (11, 21, 22) auf das Busgerippe (18, 26) und mittels entsprechender Leisten (12, 14, 25), die U-förmige Nuten aufweisen, Verkleidungsteile (13, 23, 24) unmittelbar steckbar und klemmbar sind, dadurch gekennzeichnet daß im unteren Bereich von Fenstern die Leiste (12) gleichzeitig obere Abschlußblende der Verkleidung ist, die an den Fenster- (17) und Türsäulen durch jeweils eine Verkleidungsleiste (16) formschlüssig überdeckt und geklemmt ist.

2. Vorrichtung nach Anspruch 1, dadurch gekennzeichnet, daß die Leiste (12) zum Fenster (15) hingeführt ist, und daß ein Spalt (19) zwischen der Innenseite des Glases (15) und der Leiste (12) gebildet ist, der alternativ abdichtbar ist.

3. Vorrichtung nach Anspruch 1, dadurch gekennzeichnet, daß an den Stößen (20) von Verkleidungsteilen (23, 24) durch eine H-förmige Leiste (25) die Verkleidungsteile (23, 24) miteinander, über die Winkelprofile (21, 22) gehaltert, verbunden sind.

4. Vorrichtung nach den vorhergehenden Ansprüchen, dadurch gekennzeichnet, daß die Leisten (12, 14, 25) aus Aluminium, Holz oder Kunststoff sind.

## Claims

1. Device for detachably fitting trim panels to the interior of a vehicle, particularly a bus, whereby the attachment of additional continuous angular brackets (11, 21, 22) to the bus skeleton (18, 26) and corresponding strips (12, 14, 25) with U-shaped grooves enables trim panels (13, 23, 24) to be directly plugged and locked into place, characterised in that in the lower area of the windows the strip (12) is at the same time the upper end cover of the trim panels, each of the trim panels being positively overlapped at the window (17) and door posts and locked into place by means of a trim strip (16).

2. Device according to Claim 1, characterised in that the strip (12) extends to the window (15) and that a gap (19) is formed between the inner side of the pane (15) and the strip (12) and can be sealed alternatively.

3. Device according to Claim 1, characterised in that at the joints (20) of the trim panels (23, 24) these trim panels (23, 24) are linked together by means of an H-shaped strip (25) and fastened by means of angular sections (21, 22).

4. Device according to the foregoing Claims, characterised in that the strips (12, 14, 25) are made of aluminium, wood or synthetic material.

## Revendications

1. Dispositif pour fixer de manière amovible des pièces de revêtement dans l'habitacle d'un véhicule automobile, en particulier un autobus, par l'intermédiaire de profilés à angle (11, 21, 22) continus fixés sur l'ossature (18, 26) de l'autobus et de baguettes (12, 14, 25) correspondantes présentant des rainures en forme de U permettant d'emmancher directement et de fixer par serrage les pièces de revêtement,
caractérisé en ce qu'
à la zone inférieure de la fenêtre, la baguette (12) constitue en même temps l'écran supérieur de raccordement du revêtement, cet écran étant en prise par combinaison de formes et avec serrage avec une baguette de revêtement (16) qui le recouvre sur les colonnes (17) de porte ou de fenêtre.

2. Dispositif selon la revendication 1,
caractérisé en ce que
la baguette (12) est dirigée vers la fenêtre (15) en laissant entre elle et la face interne de la vitre (15) garnissant la fenêtre, une fente (19) qui peut être obturée de manière étanche, en alternative.

3. Dispositif selon la revendication 1,
caractérisé en ce que
le long de leurs bords (20) les pièces de revêtement (23, 24) sont réunies par une baguette (25) ayant la forme d'un H, sur les profilés à angle (21, 22).

4. Dispositif selon une des revendications précédentes,
caractérisé en ce que
les baguettes (12, 14, 25) sont en aluminium, en bois ou en matière plastique.
